# EUROPEAN PATENT SPECIFICATION

(11) **EP 3 275 086 B1**
(45) Date of publication and mention of the grant of the patent: **18.08.2021**
(21) Application number: 16721344.6
(22) Date of filing: 24.03.2016
(51) Int. Cl.: H04B 5/00, D01H 4/00, D01H 13/00

(54) **TEXTILE MACHINE PRODUCING OR PROCESSING YARN AND A METHOD OF ITS ATTENDANCE**
TEXTILMASCHINE ZUR HERSTELLUNG ODER VERARBEITUNG VON GARN UND VERFAHREN DEREN BEDIENUNG
MACHINE TEXTILE PERMETTANT LA PRODUCTION OU LE TRAITEMENT D'UN FIL ET PROCÉDÉ POUR SA SURVEILLANCE

(30) Priority: 26.03.2015 CZ 20150212
(43) Date of publication of application: 31.01.2018
(73) Proprietor: Rieter CZ s.r.o., 562 01 Ústí nad Orlicí (CZ)
(72) Inventor: KOUSALIK, Pavel, 562 03 Usti nad Orlici (CZ); SLOUPENSKY, Jiri, 565 63 Sloupnice (CZ)
(74) Representative: Musil, Dobroslav
(86) International application number: PCT/CZ2016/050008
(87) International publication number: WO 2016/150410

(56) References cited:
- WO-A1-2010/133442
- WO-A1-2014/053054
- US-A1- 2013 190 897

## Description

### Technical field

The invention relates to a textile machine producing or processing yarn and comprising a plurality of identical working stations arranged next to each other and possibly comprising also other functional parts of the machine, the other functional parts of the machine include system for bobbin withdrawal, system for supplying tubes, attending device, which is arranged movable along at least one row of of the working stations with an option of stopping at a selected working station, while attending device creates machine operator, whereby each working station and/or the other functional part of the machine comprises a plurality of actuators and a plurality of sensors, which are monitored and controlled by a control system which is arranged at each working station and/or in the other functional part of the machine, whereby the control system collects data from the sensors and controls the actuators on the basis of an inserted program.

### The background art

In textile machines various wireless communication technologies are known to be used to transmit data or obtain information.

WO2010133442 discloses an arrangement of a textile machine whose control system, i.e. an electronic control device of a working station of the machine, comprises a wireless communication device. The wireless communication device has a wireless bi-directional communication channel over long distances between the control device of the machine and the contactless communication device of the operator or of an attending device. The wireless bi-directional communication channel over long distances is typically based on Wi-Fi or Bluetooth technology, since these wireless technologies exhibit the required quality of data transmission over distances of several meters, or even of several tens or hundreds of meters. Both the textile machine and the communication device of the operator or of the attending device are equipped with means for the wireless bi-directional communication over long distances. Moreover, each working station is equipped with a passive wireless communication element over short distances, typically with an RFID tag, which includes identification information of a particular working station within the entire machine. The passive wireless communication means of a working station, however, does not contain any actively transmitting elements, nor does it contain a battery, whereby it contains a memory unit and an antenna which allows contactless reading of identification data from the memory unit and, as the case may be, also once-and-for-all contactless writing of data into the memory unit. After coming to a particular working station, the operator or the attending device approaches their communication device to this passive element, the communication device being equipped with its own communication means for communication over short distances, and by means of this communication device the operator or the attending device "reads"(acquires) identification data of the working station from the RFID tag at the working station by trasmission over short distances. Subsequently, the operator or the attending device starts communication with the control system of the machine by means of their communication device through the wireless bi-directional communication channel over long distances, that is, by means of a different communication system than the one by which the identification data of the working station were acquired.

The disadvantage of this arrangement is using several transmission technologies, whereby the actual process of bi-directional data transmission takes place over long distances and, consequently, the reliability of transmission may be reduced due to interference, affecting other electronic elements of the machine within a signal range, overlapping and mutual interference of the signal between the adjacent machines, etc. In addition, in some countries the use of some communication means over long distances may be limited by legislative restrictions.

WO 2010/133442 discloses a solution in which a particular working station is identified by a passive RFID tag and the communication between a mobile device of the operator and the machine control system as such takes place independently and separately through a second communication channel. Numerous elements of the working station which are to be serviced, are provided with their own passive RFID tags for identification of the respective element, wherein the operating data is subsequently transmitted through the second communication channel. Therefore there is a relatively high risk of interference between signals and crosstalk, a significant reduction in transmission speed, as well as functionality and performance reduction.

US 2013/190897 discloses an extensive system of administration of data about assets or a device where the individual items of assets are equipped with an NFC chip, which is provided with means for collecting data about the operation of the connected asset and for the transmission of the data to the central system. Typically, this is the data about the machine operation, running time, service operations, etc. However, nowhere in US 2013/190897 is there a mention that using this NFC chip in any way affects the running operation of the control unit of the device to which the respective NFC chip is connected. Bidirectional communication, which is mentioned in US 2013/190897, is here mentioned solely for the purpose of pairing of the asset's NFC chip and the operator's device NFC chip (memory settings, erasing the memory, setting what data on the operation of the connected device the NFC chip will monitor, etc.). Nowhere in US 2013/190897 is there a mention of the fact that by NFC transmission between the device of the operator and NFC chip of the asset, the operation data of this asset is modified for reprogaming the asset to work in a different way. In US 2013/190897 the NFC chip is used only to collect data about the operation of the asset and to transmit the data to the central system.

WO 2014053054 A1 describes an authorization procedure for giving permission to people to use a computer, for example, a game machine. After receiving an authorization requirement, the computer displays or issues an authorization code, which is scanned by the user's device. The code is either in the form of a QR code or NFC communication. This code is sent by the user's device to the central server using a separate data link. The central server sends back the authorization code to the user's device. The authorization code is then manually entered by the user into the computer which the user wants to use. This computer has an authentication algorithm, which examines the code entered by the user and if everything is in order, the computer is unlocked for normal use. However, this method does not represent servicing the device using the NFC communication, as it is in our case, since the communication in WO 2014053054 A1 is used exclusively for a single transmission of an unique identification code from the computer to the user's device (communication equipment) and in no way does it serve to set, control or reprogram, etc., the computer.

From the combination of WO 2010/133442 and US 2013/190897, possibly also WO 2014053054 A1, the only fact obvious to the skilled person is that by near field communication (NFC) it is only possible to perform the identification of a working station while the data communication between the control system of the working station and the communication device of the operator takes place via a second separate communication connection (link), or by means of NFC it is only possible to identify the working station and collect its working data without affecting the operation procedure of the working means of the working station.

The aim of the invention is to remove or at least minimize the disadvantages of the background art, especially to improve wireless communication between the machine and the operator or between the machine and the attending device.

### Principle of the invention

The goal of the invention is achieved by a textile machine whose principle consists in that to the control system is connected an active contactless NFC (Near Field Communication) module for autonomous bi-directional communication over short distances, the active contactless NFC module is situated at the working station and/or at the other functional part of the machine, the active contactless NFC module (3) is configured for communication between the control system and personal wireless active communication device with an NFC function , which is equipment of the human and/or machine operator of the machine , while the personal wireless active communication device and the control system are equipped with means for reading, transmitting and writing data between the control system and the personal wireless active communication device through the active contactless NFC module after the personal wireless active communication device of the operator approaches the signal field of the active contactless NFC module.

The invention is based on using a pair of active NFC modules (devices), i.e. devices of standard Near Field Communication, wherein one active NFC device is embedded in a textile machine, or a working station of the textile machine or in another functional part of the machine, and a second active NFC device is intended for the operator or is embedded in an attending device. Unlike the passive NFC device, the active NFC device contains also its own power supply, apart from its own NFC chip with an antenna, and does not need to be powered by electromagnetic induction, as it is in the case of the passive NFC device, and so the individual elements of the active NFC device together constitute an actively transmitting and receiving communication unit, which allows autonomous bi-directional communication over short distances with an option of mutual data reading, transmission and writing between the control system and the contactless communication device of the operator or the attending device. In the background art, known is the use of passive NFC tags, which are similar to RFID tags, i.e. passive RFID elements. Passive NFC tags do not have actively transmitting parts on both sides of communication, because these passive elements of communication over short distances do not have a power supply and allow only the reading of the information stored in the passive circuit, or they allow once-and-for-all storing of the information in the circuit by using the technology of wireless communication over short distances and subsequent reading of this information again by using the same technology of wireless communication over short distances. These passive communication means over short distances, including RFID tags, known from the background art, thus cannot operate as transmitting means for bi-directional active communication over short distances, cannot be connected to the control system of the textile machine, or the working station, and therefore cannot transmit data from the control system to the device of the operator.

The technology used in active NFC devices at the same time significantly differs from the technology Bluetooth: whereas Bluetooth needs up to several seconds to establish a connection, for NFC it is less than 100 ms. Bluetooth has a range of up to tens of meters, while NFC has typically a range of only around 20 cm. Due to the short range in the NFC, specific identification of the connected device is not required, which leads to automatic extremely fast connection. Furthermore, in the case of NFC there is no danger of capturing the broadcasting of the devices operating nearby, of mutual interference of different signals, of affecting the surrounding environment, of violation of legislative rules relating to the use of radio spectrum in different countries, etc.

The textile machine according to the invention therefore enables to transmit data by bi-directional communication over short distances directly from the control system of a working station by means of active NFC devices (elements). The invention thus allows reading data at a working station, as well as writing data into the means of a working station and/or the means of another functional part of the machine without affecting the surroundings, without the need to use encryption in transmission, etc.

### Description of drawings

The invention is schematically represented in the drawings, where Fig. 1 shows an arrangement of a pair of working stations of a textile machine, each of them having one active contactless NFC module, Fig. 2 shows an arrangement of a working station with an active contactless NFC module and a holder for the wireless communication device of the operator, Fig. 3 illustrates an arrangement of a pair of working stations of a textile machine with a common active contactless NFC module, Fig. 4 shows an arrangement of a pair of working stations of a textile machine having a common active contactless NFC module and Fig. 5 shows another arrangement of a pair of working stations with a common active contactless NFC module.

### Examples of embodiment

The invention will be described with reference to an exemplary embodiment of a textile machine producing or processing yarn, which comprises at least one row of (identical) working stations arranged next to each other. Such a textile machine is, for example, an open-end spinning machine, an air-jet spinning machine, etc.

A textile machine producing or processing yarn comprises at each working station a plurality of actuators and a plurality of sensors, which are connected to a control system **1**, which collects data from the individual actuators and/or sensors of a working station and/or another functional part of the machine and on the basis of an inserted program ensures the control of the actuators connected. The control system **1** is connected to a data communication bus **2.**

If the textile machine is provided with other functional parts, e.g. an attending device, which is movable along at least one row of the working stations with an option of stopping at a selected working station, the control system **1** of a working station is coupled not only to the actuators and sensors of a working station, but is via a communication bus of the machine coupled also to the above-mentioned other functional parts, for example, to an attending device, etc. Such other functional parts may further include a system for bobbin withdrawal, a system for supplying tubes, etc.

At a working station within reach of the human operator and/or machine operator is arranged an antenna of the active contactless NFC module **3,** which is connected to a controller **10** of the control system **1** of a working station and which is intended for autonomous bi-directional communication over short distances between the control system **1** of a working station and a personal contactless communication device **4** of the operator. The personal wireless communication device **4** of the operator is equipped with a second active contactless NFC module. This pair of active contactless NFC modules allows to read, transmit and write data between the control system **1** and the wireless active communication device **4** of the operator, which is brought to the range of the signal **30** of the active contactless NFC module **3** at a working station and/or in another functional part of the machine.

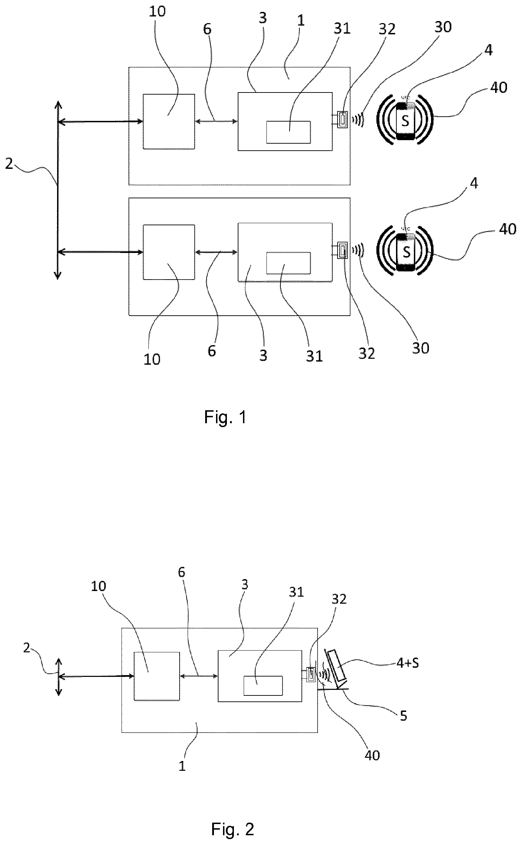

In an embodiment shown in Fig. 1, the working station is equipped with an active contactless NFC module **3** with a data memory **31,** which together constitute the so-called dynamic NFC tag, whereby the data memory **31** is via the communication interface **6** between the controller **10** and the active contactless NFC module **3** connected to the controller **10** of the control system **1** of a working station, which allows direct bi-directional exchange of data between the controller **10/** the control system **1** and the data memory **31** of the dynamic NFC tag **3. In** this manner, the controller **10** of the control system **1** can continuously write data into the data memory **31** of the active contactless NFC module **3,** the data being after mere approaching the active contactless NFC module in the communication device **4** of the operator automatically read by wireless transmission over short distances into the communication device **4** of the operator. In the opposite direction, the communication device **4** of the operator can store the required data by wireless transmission over short distances into the data memory **31** of the active contactless NFC module **3** at a working station. Subsequently, the data can be read and further processed by the controller **10** of the control system **1.** This allows automatic or automated bi-directional exchange of data between the controller **10** and the memory **31** of the dynamic NFC tag **3** and the contactless communication device **4** of the operator merely by approaching the contactless communication device **4** of the operator to a distance of several centimeters (cm) from the dynamic NFC tag **3** at a working station by means of purely local means without affecting the surrounding environment in any way.

With respect to the currently used technologies and their prevalence among the population, the wireless communication device **4** of the operator according to the illustrated embodiments consists of a mobile phone, a tablet or a similar commonly produced and available device with an NFC function, whereby this versatile wireless communication device **4** of the operator is equipped with a special software application **S,** which on the side of the device **4** of the operator ensures the use of the NFC function of this versatile device **4** of the operator for data exchange with the textile machine, for visual display of data from the control system **1,** for data transmission and data storing in the control system **1,** or in the data memory **31** of the dynamic NFC tag **3,** etc. In an unillustrated exemplary embodiment, the wireless communication device **4** of the operator is composed of a single-purpose electronic device with an NFC function (dedicated system) intended solely for the needs of this invention or solely for the needs of communication between the operator and the control systems **1** of the individual parts of the textile machine.

In an exemplary embodiment shown in Fig. 1, wherein the working station **1** is equipped with an active contactless NFC module **3** with a data memory **31,** it is advisable to exchange also data from/to another working station and/or another functional part of the machine with the contactless communication device **4** of the operator, for which purpose the wireless communication device **4** of the operator is equipped with a special software application **S.** In this case data from/to another control system of a working station and/or another functional part of the machine are sent via a data communication bus **2.** Since the operator as a rule needs both hands for carrying out service operations, it is advantageous if a holder **5** of the personal contactless communication device **4** of the operator is arranged at a working station and/or in another functional part of the machine in the vicinity of the active contactless NFC module **3** at a working station and/or another functional part of the machine, as is shown in Fig. 2. The operator simply inserts his/her personal wireless communication device **4** into the holder **5.** Thus, the personal wireless communication device **4** gets to the vicinity of the signal **30** of the active contactless NFC module **3** at a working station and/or in another functional part of the machine, starts communicating with it, whereby the operator has both hands free, can comfortably watch the display of his/her personal contactless communication device **4**, can carry out servicing at a working station and/or in another functional part of the machine according to standard procedures and/or according to the instructions on the display of the personal contactless communication device **4** and/or can interact with a working station (with the control system **1**, the active contactless NFC module **3** at the working station) and/or with another functional part of the machine, etc., by using a keyboard or a touch screen of the personal contactless communication device **4.** The wireless communication device **4** of the operator therefore in this manner creates a communication link between the operator and the working station, enabling the operator to communicate effectively with the working station when dealing with even very complicated operational problems, or, as the case may be, with failures.

In the illustrated exemplary embodiment, the holder **5** of the personal contactless communication device **4** of the operator has a form of a cradle into which the personal wireless communication device **4** is simply inserted and from which it is also simply removed, whereby the signal fields **30, 40** of the active contactless NFC module **4** at a working station and of the active contactless NFC module of the personal contactless communication device **4** of the operator overlap when inserting the personal contactless communication device **4** of the operator into the holder **5.** After removing the personal contactless communication device **4** from the holder **5,** as a result of cancellation of the mutual overlap of the signal fields **30, 40** of the active contactless NFC module **4** at a working station and the active contactless NFC module of the personal contactless communication device **4** of the operator, follows automatic interruption of bi-directional data communication over short distances between the control system **1** of the working station and/or another functional part of the machine and the personal contactless communication device **4** of the operator.

In an unillustrated example of embodiment, always one or even more active contactless NFC modules **3** connected to the control system **1** is/are arranged at a working station and at the same time also in at least one other functional part of the machine. In yet another unillustrated example of embodiment, near these active contactless NFC modules **3** (max. at a distance of several units of cm) is arranged a holder **5** of the personal contactless communication device **4** of the operator.

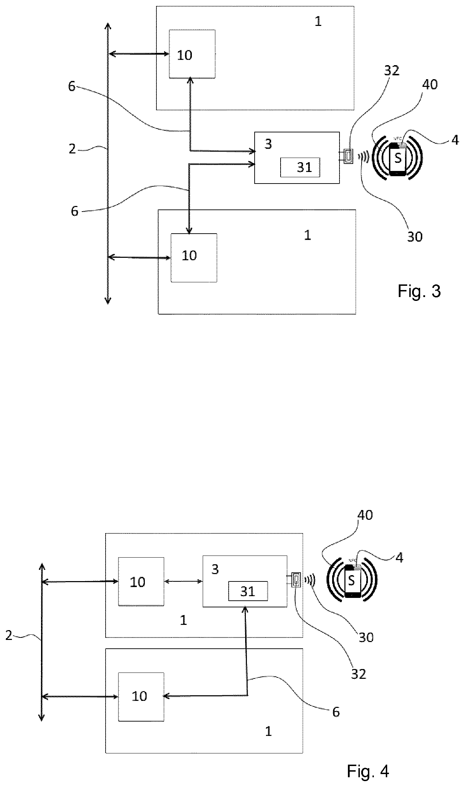

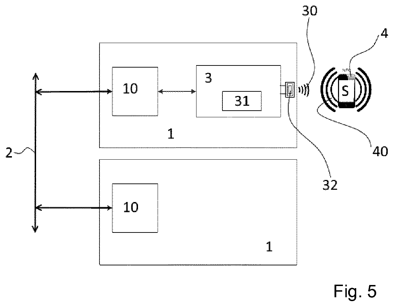

In the exemplary embodiment shown in Figs. 3 to 5, the active contactless NFC module **3** is common to at least two adjacent working stations and/or other functional parts of the machine, and is coupled to the controllers **10** of the respective control systems **1.** The active contactless NFC module **3** for the respective group of working stations and/or other functional parts of the machine is arranged either in the interspace between the working stations and/or other functional parts of the machine and the controllers **10** of the connected control systems **1** are connected to the active contactless NFC module **3** (Fig. 3) or it is embedded in one working station and the controllers **10** of the connected control systems **1** are connected to the active contactless NFC module **3** (Fig. 4) or the active contactless NFC module **3** is embedded in one working station, is connected to the controller **10** of the control system **1** of this working station and the controllers **10** of the control systems **1** of the other working stations are connected to the active contactless NFC module **3** by means of the data communication bus **2** of the machine and by means of the control system **1** of the working station, in which the respective active contactless NFC module **3** is embedded (Fig. 5).

Using the arrangement according to Figs. 3 to 5, as well as using the data bus **2** of the machine in the arrangements according to Figs. 1 to 5 allows the operator to perform bi-directional wireless communication via his/her personal contactless communication device **4** over short distances with substantially any control system **1** of any working station and/or functional part of the machine, which is favorable both with respect to possible failures of the active contactless NFC module **3** at a particular working station and/or in another functional part of the machine, as well as with respect to the planning of the following activities of the operator, etc. For that purpose, the software application **S** of the contactless communication device **4** of the operator is adapted, so as to enable to select the working station with which communication will take place through the above-mentioned links.

The functionality of the system, the individual functions, control options, etc., are substantially implemented at the level of the software at the working stations, software in the machine as well as software in the personal wireless communication devices **4** of the operators. The software in the individual parts of the whole system also determines the individual functions of the system in terms of displaying, controlling data being transmitted and stored, type of data, direction of the communication, planning activities, setting priorities, authorization of the individual operators for certain operations, etc.

In terms of functionality of the active contactless NFC module **3** at a working station and/or in another functional part of the machine according to the illustrated examples of embodiment, the data memory **31** is directly integrated into a NFC chip.

According to another exemplary embodiment, the antenna **32** of the active contactless NFC module **3** at a working station and/or in another functional part of the machine is also mbedded in the active contactless NFC module **3,** preferably being created directly on a printed circuit of the active contactless NFC module **3,** whereby its size is selected with regard to the spacious arrangement of a particular machine, e.g. according to the spacing between the individual working stations of the machine etc., so that the signal field **30** of one active contactless NFC module **3** would not interfere with the signal field **30** of the adjacent active contactless NFC module **3** and, in addition, so that the active contactless NFC modules **3** would have a signal range sufficient for reliable and safe approaching of the personal contactless communication device **4** of the operator to the active contactless NFC module **3** for bi-directional data transmission over short distances at a working station and/or in another functional part of the machine.

Another preferable embodiment is the variant in which the contactless NFC module **3** is integrated into the control system **1** of a working station and/or another functional part of the machine.

For the purposes of this invention, it is possible to use preferably, for example, the device STMicrolectronics from the series M24SR or from the series M24LR, EM Microelectronic series NF4, AMS series AS3953 as active contactless NFC modules **3** at a working station and/or in another functional part of the machine. However, it can be assumed that in the future producers of active contactless NFC modules **3** will launch other specific variants into the market which will be suitable for the implementation of the textile machine according to the invention.

### Industrial applicability

The invention can be used in the field of textile machine engineering for safe, guaranteed bi-directional data transmission by electromagnetic induction over short distances between the control systems of the working stations and/or other functional parts of the textile machine and the personal contactless communication device of the operator, which does not affect the surrounding environment.

### List of references

- 1: control system
- 10: controller of the control system
- 2: data communication bus of the machine
- 3: active contactless NFC module at a working station
- 30: signal field of the active contactless NFC module at a working station
- 31: data memory of the active contactless NFC module at a working station
- 32: antenna of the active contactless NFC module at a working station
- 4: personal wireless communication device of the operator
- 40: signal field of the active contactless NFC module of the personal contactless communication device of the operator
- 5: holder of the personal contactless communication device of the operator
- 6: communication interface between the controller of the control system and the active NFC module/data memory of the active contactless NFC module at a working station

## Claims

1. A textile machine producing or processing yarn and comprising a plurality of identical working stations arranged next to each other and possibly comprising also other functional parts of the machine,
the other functional parts of the machine include system for bobbin withdrawal, system for supplying tubes, attending device, which is arranged movable along at least one row of of the working stations with an option of stopping at a selected working station, while attending device creates machine operator;
whereby each working station and/or the other functional part of the machine comprises a plurality of actuators and a plurality of sensors, which are controlled and monitored by a control system (1), which is arranged at each working station and/or in the other functional part of the machine and which collects data from the sensors and on the basis of the inserted program controls the actuators,
**characterized in that**
to the control system (1) is connected an active contactless NFC module (3) for autonomous bi-directional communication over short distances,
the active contactless NFC module (3) is situated at the working station and/or at the other functional part of the machine
the active contactless NFC module (3) is configured for communication between the control system (1) and personal wireless active communication device (4) with an NFC function, which is equipment of the human and/or machine operator of the machine,
the personal wireless active communication device (4) and the control system (1) are equipped with means for reading, transmitting and writing data between the control system (1) and the personal wireless active communication device (4) through the active contactless NFC module (3) after approaching the personal wireless active communication device (4) of the operator into the signal field (30) of the active contactless NFC module (3).

2. The textile machine according to Claim 1, wherein the active contactless NFC module (3) comprises a data memory (31), which is coupled by a bi-directional communication interface to the controller (10) of the control system (1) and further comprises a wireless NFC interface for bi-directional communication between a data memory (31) of the active contactless NFC module (3) and the contactless communication device (4) of the operator.

3. The textile machine according to Claim 2, wherein the data memory (31) is integrated into the active wireless NFC module (3).

4. The textile machine according to Claim 2, wherein the active contactless NFC module (3) comprises an integrated antenna (32), whose size is adapted to the dimensions of a working station and/or the required communication distance.

5. The textile machine according to Claim 4, wherein the active contactless NFC module (3) is integrated into the control system (1) of a working station and/or another functional part of the machine.

6. The textile machine according to Claim 1, wherein the personal wireless communication device (4) of the operator is composed of a mobile phone, a tablet or an active portable device with an NFC function, whereby it is equipped with a software application (S) for the bi-directional transmission and display of data of a working station and/or in another functional part of the machine.

7. The textile machine according to Claim 1, wherein the personal wireless communication device (4) of the operator is composed of a single-purpose electronic device with an NFC function.

8. The textile machine according to any of Claims 1 to 7, wherein the active contactless NFC module (3) is within its signal field (30) aligned with a holder (5) of the personal contactless communication device (4) of the operator situated at a working station and/or in another functional part of the machine.

9. The textile machine according to Claim 1, wherein the active contactless NFC module (3) is common to two adjacent working stations.

10. The textile machine according to Claim 9, wherein the active contactless NFC module (3) of one working station is via a data bus (2) of the machine connected to the control systems (1) of other working stations of the machine.

11. The textile machine according to Claims 6 or 10, wherein the software application (S) in the personal wireless communication device (4) of the operator with an NFC function enables to start/realize communication also with another working station of the textile machine and/or with another functional part of the machine, other than the one on which the active contactless NFC module (3) is physically located, to which the personal wireless communication device (4) of the operator is currently connected.

## Patentansprüche

1. Textilmaschine, die ein Garn produziert oder verarbeitet, und die eine Vielzahl von identischen nebeneinander angeordneten Arbeitsstellen aufweist und die eventuell auch weitere Funktionsteile der Maschine aufweist,
diese weiteren Funktionsteile der Maschine schließen System zur Spulenabführung, System zur Versorgung mit Hülsen, Wartungseinrichtung ein, die beweglich entlang mindestens einer Reihe der Arbeitsstellen mit einer Möglichkeit eines Anhaltens bei einer ausgewählten Arbeitsstelle angeordnet ist, wobei die Wartungseinrichtung einen Maschinenoperator bildet;
wobei jede Arbeitsstelle und/oder weiterer Funktionsteil der Maschine eine Vielzahl von Aktionsgliedern und eine Vielzahl von Sensoren aufweist, die durch ein Steuersystem (1) gesteuert und verfolgt werden, das auf jeder Arbeitsstelle und/oder in einem weiteren Funktionsteil der Maschine angeordnet ist und das die Daten von den Sensoren sammelt und aufgrund eines eingelegten Programms die Aktionsglieder bedient,
**dadurch gekennzeichnet, dass**
ans Steuersystem (1) ein aktives kontaktloses NFC-Modul (3) zur autonomen bidirektionalen Kommunikation auf kurze Entfernung angeschlossen ist,
dieses aktive kontaktlose NFC-Modul (3) auf einer Arbeitsstelle und/oder auf einem weiteren Funktionsteil der Maschine angebracht ist,
dieses aktive kontaktlose NFC-Modul (3) zur Kommunikation zwischen einem Steuersystem (1) und einer drahtlosen aktiven Personalkommunikationseinrichtung (4) mit der NFC-Funktion konfiguriert ist, die eine Ausstattung einer menschlichen und/oder maschinellen Maschinenbedienung ist,
diese drahtlose aktive Personalkommunikationseinrichtung (4) und das Steuersystem (1) mit den Mitteln zum Lesen, Übertragung und Eintragung von Daten zwischen dem Steuersystem (1) und der drahtlosen aktiven Personalkommunikationseinrichtung (4) mittels des aktiven kontaktlosen NFC-Moduls (3) nach einer Annäherung der drahtlosen aktiven Personalkommunikationseinrichtung (4) des Operators ins Signalfeld (30) des aktiven kontaktlosen NFC-Moduls (3) ausgestattet sind.

2. Textilmaschine nach dem Anspruch 1, **wo** das aktive kontaktlose NFC-Modul (3) einen Datenspeicher (31) aufweist, der durch eine bidirektionale Kommunikationsschnittstelle mit einer Steuereinheit (10) eines Steuersystems (1) verbunden ist und weiter eine drahtlose NFC-Schnittstelle zur bidirektionalen Kommunikation zwischen dem Datenspeicher (31) des aktiven kontaktlosen NFC-Moduls (3) und der kontaktlosen Kommunikationseinrichtung (4) des Operators aufweist.

3. Textilmaschine nach dem Anspruch 2, **wo** der Datenspeicher (31) ins aktive drahtlose NFC-Modul (3) integriert ist.

4. Textilmaschine nach dem Anspruch 2, **wo** das aktive kontaktlose NFC-Modul (3) eine integrierte Antenne (32) aufweist, deren Größe den Abmessungen einer Arbeitsstelle und/oder der erforderlichen Kommunikationsentfernung angepasst ist.

5. Textilmaschine nach dem Anspruch 4, **wo** das aktive kontaktlose NFC-Modul (3) ins Steuersystem (1) einer Arbeitsstation und/oder eines weiteren Funktionsteils der Maschine integriert ist.

6. Textilmaschine nach dem Anspruch 1, **wo** die drahtlose Personalkommunikationseinrichtung (4) des Operators aus Mobiltelefon, Tablet oder einer aktiven mobilen Einrichtung mit der NFC-Funktion besteht, wobei diese mit einer Softwareapplikation (S) zur bidirektionalen Übertragung und Abbildung von Daten einer Arbeitsstelle und/oder eines weiteren Funktionsteils der Maschine ausgestattet ist.

7. Textilmaschine nach dem Anspruch 1, **wo** die drahtlose Personalkommunikationseinrichtung (4) des Operators aus einer elektronischen Einzweckeinrichtung mit einer NFC-Funktion besteht.

8. Textilmaschine nach einem der Ansprüche 1 bis 7, **wo** das aktive kontaktlose NFC-Modul (3) in seinem Signalfeld (30) mit einem Halter (5) der kontaktlosen Personalkommunikationseinrichtung (4) des Operators in einer Ebene steht, der auf einer Arbeitsstelle und/oder auf einem weiteren Funktionsteil der Maschine angebracht ist.

9. Textilmaschine nach dem Anspruch 1, **wo** das aktive kontaktlose NFC-Modul (3) für zwei benachbarte Arbeitsstellen gemeinsam ist.

10. Textilmaschine nach dem Anspruch 9, **wo** das aktive kontaktlose NFC-Modul (3) von einer Arbeitsstelle über einen Datenpfad (2) der Maschine an Steuersysteme (1) von weiteren Arbeitsstellen der Maschine angeschlossen ist.

11. Textilmaschine nach den Ansprüchen 6 oder 10, wo die Softwareapplikation (S) in der drahtlosen Personalkommunikationseinrichtung (4) des Operators mit einer NFC-Funktion ermöglicht, die Kommunikation auch mit einer anderen Arbeitsstelle einer Textilmaschine und/oder mit einem anderen weiteren Funktionsteil der Maschine als demjenigen aufzunehmen/zu realisieren, auf dem das aktive kontaktlose NFC-Modul (3) körperlich angebracht ist, an das die drahtlose Personalkommunikationseinrichtung (4) des Operators zur Zeit angeschlossen ist.

## Revendications

1. Machine textile qui permet la production ou le traitement de fil et qui comprend un nombre de postes de travail identiques, disposés les uns à côté des autres, qui peut éventuellement comprendre d'autres parties fonctionnelles de la machine,
ces autres parties fonctionnelles de la machine comprennent un système d'évacuation de bobines, un système d'alimentation en tubes, un dispositif de commande disposé de manière mobile le long d'au moins une rangée de postes de travail avec possibilité de s'arrêter au poste de travail sélectionné, tandis que le dispositif de commande représente l'opérateur de la machine ;
où chaque poste de travail et/ou une autre partie fonctionnelle de la machine comprennent un nombre d'actionneurs et un nombre de capteurs, commandés et surveillés par le système de commande (1) disposé au niveau de chaque poste de travail et/ou dans une autre partie fonctionnelle de la machine, qui collecte les données des capteurs et commande les actionneurs en fonction du programme introduit,
**caractérisée en ce que**
au système de commande (1) est connecté un module NFC actif sans contact (3) pour une communication bidirectionnelle à courte portée,
ce module NFC actif sans contact (3) se situe au poste de travail et/ou sur une autre partie fonctionnelle de la machine
ce module NFC actif sans contact (3) est configuré pour permettre la communication entre le système de commande (1) et le dispositif de communication personnel actif sans fil (4) avec fonction NFC qui représente l'équipement de la commande assurée par un opérateur et/ou une machine,
ce dispositif personnel de communication actif sans fil (4) et le système de commande (1) sont équipés d'outils de lecture, de transmission et d'écriture de données entre le système de commande (1) et le dispositif personnel de communication actif sans fil (4) via le module NFC actif sans contact (3) après déplacement du dispositif personnel de communication actif sans fil personnel (4) de l'opérateur à proximité du champ de signal (30) du module NFC actif sans contact (3).

2. Machine textile selon la revendication 1, **où** le module NFC actif sans contact (3) comprend une mémoire de données (31) connectée au réducteur (10) du système de commande (1) par une interface de communication bidirectionnelle, et comprend en plus une interface NFC pour communication bidirectionnelle entre la mémoire de données (31) du module NFC actif sans contact (3) et le dispositif de communication sans contact (4) de l'opérateur.

3. Machine textile selon la revendication 2, **où** la mémoire de données (31) est intégrée dans le module NFC actif sans fil (3).

4. Machine textile selon la revendication 2, **où** le module NFC actif sans contact (3) comprend une antenne intégrée (32) dont la taille est adaptée aux dimensions du poste de travail et/ou la distance de communication exigée.

5. Machine textile selon la revendication 4, **où** le module NFC actif sans contact (3) est intégré au système de commande (1) du poste de travail et/ou aux autres parties fonctionnelles de la machine.

6. Machine textile selon la revendication 1, **où** le dispositif personnel de communication sans fil (4) de l'opérateur comprend un téléphone portable, une tablette ou un dispositif actif portable avec fonction NFC, et est équipé d'une application logicielle (S) pour une transmission bidirectionnelle et affichage de données du poste de travail et/ou d'une autre partie fonctionnelle de la machine.

7. Machine textile selon la revendication 1, **où** le dispositif personnel de communication sans fil (4) de l'opérateur comprend un dispositif électronique dédié avec fonction NFC.

8. Machine textile selon l'une des revendications de 1 à 7, **où** le module NFC actif sans contact (3) est aligné dans son champ de signal (30) avec le support (5) du dispositif personnel de communication sans contact (4) de l'opérateur situé au poste de travail et/ou sur une autre partie fonctionnelle de la machine.

9. Machine textile selon la revendication 1, **où** le module NFC actif sans contact (3) est commun pour deux postes de travail voisins.

10. Machine textile selon la revendication 9, **où** le module NFC actif sans contact (3) d'un poste de travail est connecté aux systèmes de commande (1) des autres postes de travail de la machine via un bus de données (2).

11. Machine textile selon les revendications 6 ou 10, **où** l'application logicielle (S) dans le dispositif personnel de communication sans fil (4) de l'opérateur avec fonction NFC permet de démarrer/assurer une communication également avec un autre poste de travail de la machine textile et/ou avec une autre partie fonctionnelle de la machine, autre que celle sur laquelle se situe physiquement le module NFC actif sans contact (3) auquel est actuellement connecté le dispositif personnel de communication sans fil (4) de l'opérateur.
